# EUROPÄISCHE PATENTSCHRIFT

(11) **EP 2 735 990 B1**
(45) Veröffentlichungstag und Bekanntmachung des Hinweises auf die Patenterteilung: **25.04.2018**
(21) Anmeldenummer: 13187650.0
(22) Anmeldetag: 08.10.2013
(51) Int. Cl.: G06F 21/12, H04W 4/00, H04L 29/08, H04M 1/725, H04W 12/10, G06F 21/10

(54) **VERFAHREN UND VORRICHTUNG ZUR ERKENNUNG VON ANWENDUNGEN AUF MOBILEN ENDGERÄTEN**
METHOD AND APPARATUS FOR DETECTING APPLICATIONS ON MOBILE TERMINALS
PROCÉDÉ ET DISPOSITIF DE RECONNAISSANCE D'APPLICATIONS SUR DES TERMINAUX MOBILES

(30) Priorität: 27.11.2012 DE 102012111481
(43) Veröffentlichungstag der Anmeldung: 28.05.2014
(73) Patentinhaber: Deutsche Telekom AG, 53113 Bonn (DE)
(72) Erfinder: Wang, Hao, 53229 Bonn (DE); Müller-Jung, Marcus, 47259 Duisburg (DE)
(74) Vertreter: 2K Patentanwälte Blasberg Kewitz & Reichel

(56) Entgegenhaltungen:
- EP-A2- 2 337 307
- WO-A2-2004/114042
- US-A1- 2009 061 840
- US-A1- 2012 129 503

## Beschreibung

Die Erfindung betrifft ein Verfahren und eine Vorrichtung zur Steuerung der Installation von Anwendungen auf einem mobilen Endgerät.

### Gebiet der Erfindung:

Mobile Telefone werden heute oftmals durch die Provider der Mobilfunknetze spezifisch mit Anwendungen voreingerichtet. Hierbei wird eine Reihe von Anwendungen schon im Vorfeld vor der Auslieferung an den Kunden auf die Geräte aufgespielt. Diese Anwendungen sind oftmals spezifisch auf den Provider des Mobilfunknetzes ausgerichtet oder für diesen angepasst. Es gibt somit oftmals eine Vielzahl von Versionen von unterschiedlichen Anwendungen für unterschiedliche Mobilfunkprovider. Ferner bewerben Mobilfunkprovider oftmals Produkte und Anwendungen, die Benutzer dann auf ihr mobiles Endgerät laden können, um diese dann darauf aufzuführen. Bei all diesen Anwendungen weiß weder der Mobilfunk-Provider noch der Hersteller der Software, wie häufig diese Anwendungen benutzt werden und ob diese überhaupt installiert wurden. Somit gibt es keine soliden und flexiblen Mechanismen zwischen dem Betreiber eines Mobilfunknetzwerkes und den Anwendungsentwicklern, um Vereinbarungen auf der Basis der Benutzung der Anwendungen nachzuvollziehen. In der Regel werden Anwendungen auch von einem globalen Marktplatz installiert, wie dies zum Beispiel beim iPhone (iStore/Appstore) oder bei Android-Telefonen (Marketplace) der Fall ist. Durch diesen zentralen Downloadbereich ist es für einen Provider oftmals nicht möglich zu erkennen, welche Geräte mit welchen Anwendungen versehen werden. Das gleiche gilt für den Hersteller bzw. die Programmierer der Anwendung, deren Anwendungen durch den zentralen Marktplatz auf die mobilen Endgeräte geladen wird. Die Anwendungsentwickler haben somit keine akkuraten Informationen über die Anzahl von aktiven Installationen und den installierten Treibern. Umsatzbeteiligungsmodelle können dadurch nicht fair sichergestellt werden.

Die WO 2004/114042 A2 offenbart ein Verfahren, bei dem auf einem mobilen Endgerät eine Liste von für den Benutzer aktivierten Anwendungen abgelegt ist, die der Benutzer ausführen darf.

Die EP 2 337 307 A2 offenbart den Anmeldestatus eines Kommunikationsservices, und schaltet den Service frei, falls ein Zugang durch einen Server erlaubt wird. Es wird somit ein hohes Gewicht auf die sichere Übermittlung der Zugangsinformationen gelegt.

US 2012 129503 A1 beschreibt ein System zur Verteilung von Software in einem Netzwerk mit mobilen Systemen, das auf Regeln basiert.

US 2009/061840 A1 beschreibt die Konfiguration eines Telefons, umfassend einen Software Stack, Hardware-Einstellungen basierend auf den Informationen eines Netzwerkbetreibers. Die Konfiguration wird dabei von einem Server geprüft.

### Übersicht über die Erfindung:

Aufgabe der vorliegenden Erfindung ist die Bereitstellung eines Verfahrens gemäß Anspruch 1 und der abhängigen Ansprüche 2-8 und eines Systems gemäß Anspruch 9, bei dem sichergestellt werden kann, welche Anwendungen für mobile Geräte eines Herstellers bei einem Provider voreingerichtet sind bzw. vorinstalliert sind und welche Anwendungen vom Provider unterstützt werden.

Im Einzelnen handelt es sich um ein Verfahren zur Steuerung der Installation von Anwendungen auf einem mobilen Endgerät. Bei diesen Endgeräten handelt sich vorzugsweise um ein Android Telefon oder ein anderes Smartphone, das über eine Netzwerkschnittstelle zu einem IP-Netzwerk verfügt. Diese Smartphones sind in der Regel mit einer Firmware ausgestattet, deren Konfigurationen vom Provider des Netzwerkes festgelegt werden können. Bei dieser Firmware wird schon bei der Auslieferung an den Endkunden ein Token Provider installiert sein. Der Token Provider ist bereits konfiguriert, so dass er die Netzwerkadresse eines Token Servers kennt. Der Token Server wird vom Netzprovider über ein Netzwerk (IP-Newtzwerk) bereitgestellt, um eine Vielzahl von Token zum Download bereitzustellen. Die Token zeigen an, welche Anwendungen vom Netzprovider unterstütz werden. Die Bereitstellung der Token ist dabei spezifisch von der installierten SIM-Karte und /oder der Betriebssystemversion abhängig. Andere Parameter sind ebenfalls denkbar und werden unten beschrieben. Durch diesen Ansatz ist es möglich, dass der Provider des Netzwerkes festlegen kann, welche Anwendungen von ihm auf dem mobilen Endgerät unterstützt werden. Durch diesen Ansatz ist es ebenfalls möglich für die Anwendung, die auf dem mobilen Endgerät läuft, zu erkennen, ob die Anwendung vom Netzwerkprovider unterstützt wird oder nicht. Die Anwendung, die auf dem mobilen Endgerät installiert ist oder durch den Benutzer installiert wird, kann über eine im Vorfeld festgelegte Schnittstelle auf den Token Provider zugreifen. Diese Schnittstelle kann eine API sein, oder jegliche andere Schnittstelle, die für die Kommunikation zweier Anwendungen denkbar ist (XML, TCP/IP Sockets etc.). Diese Schnittstelle wird im Vorfeld bei der Programmierung der Anwendung berücksichtigt und ist in der Regel Teil des Programmcodes der Anwendung, die auf dem mobilen Endgerät installiert ist. In der Regel weist die Anwendung eine weitere Schnittstelle auf, die mit einem Anwendungs-Server kommuniziert, der in der Regel vom Entwickler der Anwendung bereitgestellt wird. Dieser Server kann allerdings auch von Netzwerk Providern betrieben werden, so dass ebenfalls der Netzwerk Provider Kenntnis davon erlangt, wenn eine Anwendung einen Token beim Token Provider abfragt. In der Regel jedoch dient der Token zur Überprüfung der Ausführung von Anwendungen und der Unterstützung der Anwendungen für den Entwickler der Anwendung. Der Anwendungsserver erhält in der Regel Informationen beim Start der Anwendung oder bei bestimmten Abläufen innerhalb der Anwendung. Auch kann der Token bei der erstmaligen Installation der Anwendung abgefragt werden.

Das Verfahren umfasst weiter die Schritte:
- Herunterladen der für das mobile Endgerät spezifischen Token vom Token Server durch den Token Provider und
- Speichern dieser Token in einem Token Speicherplatz auf dem mobilen Endgerät;
- Starten der Anwendung, wobei die Anwendung über die Schnittstelle beim Token Provider nach einem Token für die Anwendung fragt, und
- falls der Token bereitgestellt wird, so erfolgt eine Meldung an den Token Server.

Der Token Provider arbeitet dabei mit dem Token Server zusammen, indem er in zeitlich regelmäßigen Abständen die Token herunter lädt und sie lokal speichert. Dies hat den Vorteil, dass auch die Token lokal vorhanden sind, wenn keine Netzwerkverbindung gegeben ist. Die Token können somit lokal vorgehalten werden, und von den Anwendungen über den Token Provider abgerufen werden. In einer bevorzugten Ausführungsform werden die Token auf einem Token Speicherplatz auf dem mobilen Endgerät abgelegt, der verschlüsselt ist. Die Verschlüsselung wird durch bekannte Verfahren erreicht, insbesondere kann dies durch ein integriertes Kryptomodul oder über die SIM-Karte erfolgen. Es ist natürlich denkbar, dass bei Geräten die permanent online sind eine lokale Speicherung vermieden werden kann. Die Speicherung kann auch so ausgebildet sein, dass die Token lediglich gecacht werden und keine gesamte Liste von Token herunter geladen wird, sondern lediglich die Token, die von einer Anwendung benötigt werden bzw. von einer Anwendung die auf dem mobilen Endgerät installiert ist.

Das Starten der Anwendung kann unterschiedliche Funktionen beinhalten. Einerseits kann beim erstmaligen Starten eine Abfrage nach dem Token erfolgen oder während des Programmablaufs kann immer wieder ein Abfragen des Token erfolgen. Auch kann eine Abfrage beim Starten einer bestimmten Funktion notwendig sein. Ferner ist es denkbar dass der Token nur beim Installationsprozess abgefragt wird. Das Abfragen des Token liegt in der Hand des Entwicklers der Anwendung, damit dieser den für ihn optimalen Zeitpunkt der Abfrage bestimmen kann. Der Entwickler verwendet in der Regel eine definierte Schnittstelle, die zum Beispiel über einen Funktionsaufruf oder eine API definiert sein kann.

In einer bevorzugten Ausführungsform konfiguriert sich die Anwendung auf der Basis des erhaltenen Token. Die Konfiguration kann umfassen, dass bestimmte bildliche Darstellungen verwendet werden bzw. Darstellungen und Markenhinweise der Netzbetreiber bzw. Netzprovider. Weiterhin können besondere Funktionen in Abhängigkeit des Token freigeschaltet werden. Auch ist es möglich bestimmte Funktionen zu deaktivieren.

Der Token umfasst in der Regel Komponenten, die aus der Verschlüsselung und Signaturtechnik bekannt sind. So ist zum Beispiel ein öffentlicher und privater Schlüssel denkbar, die in den Token einfließt. Es kann somit zum Beispiel eine Information im Token-Element enthalten sein, die durch den öffentlichen Schlüssel der Anwendung bzw. des Unternehmens, das die Anwendung entwickelt hat, verschlüsselt wurde. Die Anwendung selber kann dann auf der Basis des implementierten privaten Schlüssels den Token überprüfen. In einer alternativen Ausführungsform leitet die Anwendung den Token an den Server des Entwicklers der Anwendung weiter bzw. an den Anwendungsserver weiter, der dann den Token überprüft. Hierdurch kann vermieden werden, dass der private Schlüssel in der Anwendung selber enthalten ist. Nachdem die Bestätigung des Token erfolgte, wird dann eine Abarbeitung durch die Anwendung vorgenommen.

Neben einem Zertifikat und/oder einem öffentlichen Schlüssel der Anwendung umfasst der Token vorzugsweise eine Identifikation für die Anwendung, wobei die Identifikation der Anwendung der PacketName der Anwendung sein kann.

In einer möglichen Ausführungsform wird eine Menge von Token durch den Token Provider regelmäßig vom Token Server heruntergeladen und gespeichert. Die Auswahl der Token bzw. die Zuordnung der Token zum mobilen Endgerät kann auf unterschiedlichen Filterkriterien basieren. In der Regel sind bestimmte Token nur für bestimmte Telefone von bestimmten Herstellern unter Berücksichtigung bestimmter Provider nutzbar. Bei einer Anfrage des Token Providers beim Token Server, werden die Token auf der Basis einer oder mehrerer der folgenden Informationen bereitgestellt werden: SIM-Informationen, Endgerätetyp, Betriebssystemtyp, Betriebssystemversion, Laufzeit des Token. Es sind natürlich noch weitere Kriterien denkbar, wie die Art des Mobilfunkvertrages, der Leistung des mobilen Telefons, etc.

In der bevorzugten Ausführungsform befinden sich die Komponenten wie Anwendungsserver und TokenServer in einem IP-Netzwerk (Internet), das über die bekannten DNS Dienste abgefragt werden kann. Somit kann der Token Provider zum Beispiel einen festen Domänennamen oder ebenfalls eine feste IP Adresse verwalten, um auf den Token Server zuzugreifen. Es ist ebenfalls denkbar, dass bestimmte reservierte Bereiche der Adresse verwendet werden, die vom Netzprovider verwaltet werden. Die Token Server und Anwendungsserver laufen in der Regel auf bekannten Computersystemen, die mit entsprechenden Betriebssystemen wie Linux, Windows oder Unix ausgerüstet sind, um den entsprechenden Dienst im Netzwerk bereitzustellen. In der Regel werden Netzwerkprotokolle verwendet, wie sie aus einem IP basierten Netzwerk bekannt sind.

Ein weiterer Teil der Erfindung sind die einzelnen Komponenten, die das Verfahren implementieren. Ein Token Provider, ein Token Server und ein Anwendungsserver, die eingerichtet und ausgebildet sind, um das Verfahren nach einem oder mehreren der Ansprüche 1 bis 10 durchzuführen. Wie bereits oben ausgeführt wurde, ist der Token Provider vorzugsweise ein Teil der Firmware bzw. eine Anwendung, die in der Firmware des mobilen Endgerätes vorinstalliert ist, wenn es dem Endkunden ausgeliefert wird. Der Token Server ist ein Computersystem, das eine Datenbank bereitstellt, in der die Vielzahl von Token abgelegt sind. Die Datenbank kann dabei eine relationale Datenbank oder eine objektorientierte Datenbank sein oder jegliche andere Art von Datenbank. Auf dem Computersystem läuft in der Regel ein bekanntes Betriebssystem, wie es oben ausgeführt wurde. In einer weiteren Ausführungsform ist der Zugriff auf den Token Server nur möglich durch mobile Endgeräte, die sich im Netzwerk des Netz-Providers befinden. D.h. es erfolgt in der Regel eine Maskierung anhand der Netzwerkadressen oder eine Maskierung anhand der Identifikation des mobilen Endgerätes. Der Anwendungsserver ist in der Regel ein System, das ebenfalls eine Datenbank verwaltet oder Web Dienste, auf die die mobilen Endgeräte und die Anwendungen zugreifen können.

### Kurze Figurenbeschreibung:

Im Folgenden werden die Figuren beschrieben, die eine mögliche Implementierung der Erfindung darstellen, wobei die Figuren nicht als eine Beschränkung aufzufassen sind.
Fig. 1 zeigt ein Ablaufdiagramm des Verfahrens;
Fig. 2 zeigt ein Beispiel eines Aufbaus von zwei Token;
Fig. 3 zeigt einen Beispielcode für die Implementierung der Anfrage nach einem Token

### Detaillierte Beschreibung der Figuren:

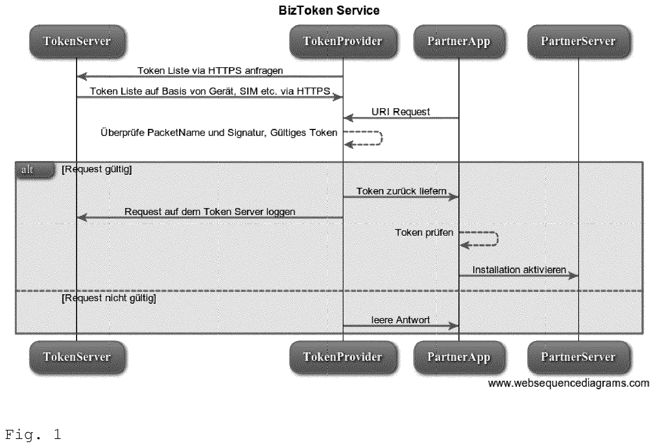

Die Figur 1 zeigt die unterschiedlichen Komponenten, die bei der vorliegenden Erfindung berücksichtigt werden. Erstens der Token Server, der mit dem Token Provider in Kontakt steht. Der Token Provider fragt eine Token-Liste vom Token Server an. Diese Anfrage kann zum Beispiel über das Protokoll HTTPS erfolgen, das entsprechend verschlüsselt ist. Der Token Server gibt dann basierend auf der Anfrage eine Liste von Token auch über die gleiche Verschlüsselungsart HTTPS zurück, die spezifisch für das mobile Endgerät sind. Es ist hierbei zu beachten, dass der Token Provider auf dem mobilen Endgerät abläuft und der Token Server über ein Netzwerk vom mobilen Endgerät erreicht wird. Weiterhin läuft eine Anwendung, eine so genannte Partner APP, auf dem mobilen Endgerät, die im Laufe ihrer Abarbeitung eine Anfrage (URI-Request) nach einem Token an den Token Provider sendet. Diese Anfrage wird vom Token Provider überprüft, ob sie in ihrer Art zulässig ist, um dann im Falle der Zulässigkeit einen Token zurückzugeben. Bei der Abfrage der Zulässigkeit wird geprüft, ob ein zulässiger Token den Eigenschaften der Anwendung entspricht und dessen Ablaufdatum noch nicht abgelaufen ist. In einer möglichen Ausführungsform wird nach der Übergabe des Token an die Anwendung eine entsprechende Mitteilung an den Token Server gesendet, damit dieser in Kenntnis darüber ist, dass der Token von einer Anwendung abgefragt wurde. Die Anwendung überprüft dann den Token entweder lokal; wie in der Figur 1 dargestellt, sie kann aber auch über den Anwendungsserver (Partnerserver) eine Überprüfung durchführen lassen, was nicht dargestellt ist. Daraufhin wird die Anwendung entsprechend aktiviert und es wird dem Anwendungsserver mitgeteilt, dass eine aktive Installation auf dem mobilen Endgerät vorhanden ist. Als eine aktive Installation betrachtet man eine Anwendung, die auch tatsächlich vom Benutzer verwendet wird und nicht nur auf diesem Gerät installiert ist. Sollte die Anfrage nicht zulässig gewesen sein, wie in der Figur 1 unterhalb der gestrichelten Linie zu erkennen ist, so wird kein Token an die Anwendung übermittelt.

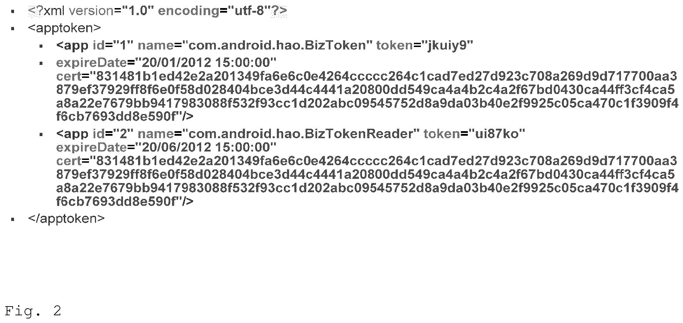

Figur 2 zeigt ein Beispiel einer Token Liste. Hierbei handelt es sich bei der Darstellung um eine Liste von zwei Token, die innerhalb von XML Daten übergeben werden. Zuerst wird die Liste der Token durch <apptoken> geöffnet, wobei dann ein Token über einen ID, im vorliegenden Falle 1 und 2, identifiziert wird, ferner wird ein Name definiert, um dann weiterhin ein Token-Feld zu haben, aus dem ersichtlich ist, das für den Token eine Zustimmung zwischen dem Provider des Netzwerkes und des Lieferanten der Anwendung vorliegt. In einem weiteren Feld wird die Laufzeit des Token definiert. Sollte zum Beispiel eine bestimmte Werbekampagne geschaltet sein, für die der Netzwerkprovider über einen bestimmten Zeitraum Werbung schaltet, so ist der Token für diesen Zeitraum zu aktivieren, um erkennen zu können, welchen Erfolg eine solche Bewerbung (schalten von Werbung) einer Anwendung innerhalb des Zeitraums der Bewerbung hat. Das Zertifikat selber ist in der Regel ein öffentlicher Schlüssel oder eine Signatur mit einem öffentlichen Schlüssel, die entsprechend durch die Anwendung überprüfbar ist. Der zweite Token in der Liste ist entsprechend parallel aufgebaut, so dass eine detaillierte Stellungnahme hierzu nicht notwendig ist.

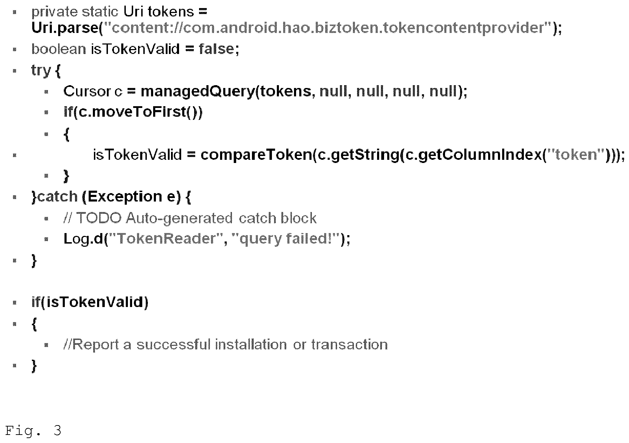

Die Figur 3 zeigt die Implementierung eines Java Codes für eine Anwendung. In einem ersten Schritt wird die eindeutige Adresse des Token Providers definiert, um den Token zu definieren, der durch die Anwendung gesucht wird. Daraufhin wird dann der Token an eine Funktion übergeben, die einen Cursor C bereitstellt. Es erfolgt dann eine Überprüfung des Token. Falls dieser zulässig ist, erfolgt ein Bericht, dass eine korrekte Überprüfung des Token erfolgte. Im negativen Falle wird eine entsprechende Meldung gegeben, dass das Suchen des Token nicht erfolgreich war.

## Patentansprüche

1. Verfahren zur Steuerung der Konfiguration von Anwendungen auf einem mobilen Endgerät, mit einem Token Provider, der auf dem mobilen Endgerät installiert ist, und der die Netzwerkadresse eines Token Servers kennt, wobei der Token Server vom Netzprovider über ein Netzwerk bereitgestellt wird, um eine Vielzahl von Token zum Download bereitzustellen, wobei die Token anzeigen, welche Anwendungen vom Netzprovider unterstützt werden, und wobei ein solcher Token ein Zertifikat und/oder einen öffentlichen Schlüssel der Anwendung umfasst und eine Identifikation für die Anwendung,
mit einer Anwendung, die auf dem mobilen Endgerät installiert ist, wobei die Anwendungen über eine Schnittstelle auf den Token Provider zugreift,
weiterhin umfassend einen Anwendungsserver, der Informationen von der Anwendung erhält,
umfassend die Schritte:
- Herunterladen der für das mobile Endgerät spezifischen Token vom Token Server durch den Token Provider und
- Speichern dieser Token in einem Token Speicherplatz auf dem mobilen Endgerät;
- Starten der Anwendung, wobei die Anwendung über die Schnittstelle beim Token Provider nach einem Token für die Anwendung fragt, und
- falls der Token bereitgestellt wird, erfolgt eine Überprüfung des Token durch die Anwendung selber oder der Token wird durch die Anwendung an den Anwendungsserver gesendet, der den Token alternativ überprüft, nach der Prüfung erfolgt eine entsprechende Aktivierung der Anwendung, wobei die Überprüfung durch Prüfen des Zertifikats und/oder des öffentlichen Schlüssels erfolgt und es wird dem Anwendungsserver mitgeteilt, dass eine aktive Installation auf dem mobilen Endgerät vorhanden ist.

2. Das Verfahren nach dem vorhergehenden Anspruch, wobei sich die Anwendung auf der Basis des erhaltenen Token konfiguriert.

3. Das Verfahren nach dem vorhergehenden Anspruch, wobei die Anwendung Funktionen auf der Basis des erhaltenen Token freischaltet.

4. Das Verfahren nach dem vorhergehenden Anspruch, wobei die Identifikation der Anwendung ein PacketName der Anwendung ist.

5. Das Verfahren nach einem oder mehreren der vorhergehenden Ansprüche, wobei die Token, die vom Token Provider heruntergeladen wurden, in einem sicheren Speicherbereich abgelegt werden.

6. Das Verfahren nach einem oder mehreren der vorhergehenden Ansprüche, wobei eine Menge von Token durch den Token Provider regelmäßig vom Token Server heruntergeladen werden, und gespeichert werden.

7. Das Verfahren nach einem oder mehreren der vorhergehenden Ansprüche, wobei bei einer Anfrage des Token Providers beim Token Server, die Token auf der Basis einer oder mehrerer der folgenden Informationen bereitgestellt werden: SIM-Informationen, Endgerätetyp, Betriebssystemtyp, Betriebssystemversion, Laufzeit des Token.

8. Das Verfahren nach einem oder mehreren der vorhergehenden Ansprüche, wobei der Token Server und/oder der Anwendungsserver über ein IP-Netzwerk zugänglich sind.

9. System zur Steuerung der Installation von Anwendungen auf einem mobilen Endgerät, **gekennzeichnet durch** einen Token Provider, einen Token Server und einen Anwendungsserver, die eingerichtet und ausgebildet sind, um das Verfahren nach einem oder mehreren der Ansprüche 1 bis 8 durchzuführen.

## Claims

1. A method for controlling the configuration of applications on a mobile terminal device, having a token provider installed on the mobile terminal device and knowing the network address of a token server, wherein the token server is provided by the network provider over a network to provide a plurality of tokens for download, wherein the tokens indicate which applications are supported by the network provider, and wherein such token comprises a certificate and/or a public key of the application, and
with an application installed on the mobile device, where the applications access the token provider via an interface,
further comprising an application server that receives information from the application,
comprising the steps:
- Downloading the tokens specific to the mobile device from the token server by the token provider; and
- Storing of these tokens in a token storage area on the mobile device;
- Starting the application, wherein the application request the token provider for a token for the application via the interface, and
- If the token is provided, the token is verified by the application itself, or the token is sent by the application to the application server, which alternatively verifies the token, after the verification the application is activated accordingly, with the verification being performed by verifying the certificate and/or the public key, and the application server is notified that an active installation is present on the mobile device.

2. The method according to the previous claim, where the application configures itself on the basis of the token received.

3. The method according to the previous claim, whereby the application unlocks functions on the basis of the received token.

4. The method according to the preceding claim, where the application identification is a packet name of the application.

5. The method according to one or more of the foregoing claims, whereby the tokens downloaded by the Token Provider are stored in a secure storage area.

6. The method according to one or more of the foregoing claims, whereby a set of tokens are regularly downloaded and stored by the Token Provider from the Token Server.

7. The method according to one or more of the foregoing claims, whereby in the case of a request from the token provider to the token server, the tokens are provided on the basis of one or more of the following information: SIM information, terminal device type, operating system type, operating system version, runtime of the token.

8. The method according to one or more of the foregoing claims, whereby the token server and/or the application server are accessible over an IP network.

9. Method for controlling the installation of applications on a mobile terminal device, **characterized by** a token provider, a token server and an application server set up and configured to perform the method according to one or more of Claims 1 to 8.

## Revendications

1. Un procédé de commande de l'installation d'applications sur un terminal mobile, avec un fournisseur de jeton qui est installé sur le terminal mobile, et connaît l'adresse de réseau d'un serveur de jetons, dans lequel ledit serveur de jetons est fourni par le fournisseur de réseau sur un réseau afin de fournir une pluralité de jeton à télécharger, dans lequel les jetons indiquent quelles applications sont supportées par le fournisseur de réseau, et dans lequel ledit jeton comporte un certificat et/ou une clé publique relative à l'application et
avec une application installée sur le terminal mobile, où les applications accèdent au fournisseur de jeton via une interface,
comprenant en outre un serveur d'applications qui reçoit une information de l'application, comprenant les étapes consistant à:
- téléchargement par le fournisseur de jetons des jetons spécifiques au terminal mobile depuis le serveur de jetons ; et
- le stockage de ces jetons au sein d'un espace de stockage de jeton dans le terminal mobile;
- démarrage de l'application, dans lequel l'application demande au fournisseur de jetons un jeton pour l'application via l'interface ; et
- si le jeton est fourni, le jeton est vérifié par l'application elle-même, ou le jeton est transmis par l'application au serveur d'application, qui alternativement vérifie le jeton, à la suite de quoi, l'application est activé en conséquence, avec la vérification effectué par la vérification du certificat et/ou de la clé publique, et le serveur d'application reçoit notification qu'une installation active est présente sur le terminal mobile.

2. Le procédé selon la revendication précédente, dans lequel l'application se configure elle-même sur la base du jeton obtenu.

3. Le procédé de la revendication précédente, dans lequel l'application déverrouille des fonctions sur la base du jeton reçu.

4. Le procédé selon la revendication précédente, dans lequel l'identification de l'application est un nom de paquet de l'application.

5. Le procédé selon l'une ou plusieurs des revendications précédentes, dans lequel les jetons téléchargés par le fournisseur de jetons sont stockés au sein d'une aire de stockage sécurisée.

6. Le procédé selon l'une ou plusieurs des revendications précédentes, dans lequel un jeu de jetons est régulièrement téléchargés et stockés par le fournisseur de jetons depuis le serveur de jetons.

7. Le procédé selon l'une ou plusieurs des revendications précédentes, dans lequel, lors d'une demande du fournisseur de jetons au serveur de jetons, les jetons sont fournis sur la base d'une ou plusieurs informations suivantes : l'information SIM, le type de terminal, le type de système d'exploitation, la version du système d'exploitation, la durée de validité du jeton.

8. Le procédé selon l'une ou plusieurs des revendications précédentes, dans lequel le serveur de jeton et / ou le serveur d'applications sont accessibles via un réseau IP.

9. Un procédé de commande d'installation d'applications sur un terminal mobile, **caractérisé par** un fournisseur de jetons, un serveur de jetons et un serveur d'application installés et configurés pour la mise en oeuvre du procédé selon une ou plusieurs des revendications 1 à 8.
